(19) Europäisches Patentamt
European Patent Office
Office européen des brevets

(11) Numéro de publication : **0 352 180 B1**

(12) **FASCICULE DE BREVET EUROPEEN**

(45) Date de publication du fascicule du brevet : **30.12.92 Bulletin 92/53**

(51) Int. Cl.$^5$ : **C03C 17/30**

(21) Numéro de dépôt : **89402033.8**

(22) Date de dépôt : **18.07.89**

(54) **Vitrage muni d'une couche antigivre.**

(30) Priorité : **20.07.88 FR 8809797**

(43) Date de publication de la demande : **24.01.90 Bulletin 90/04**

(45) Mention de la délivrance du brevet : **30.12.92 Bulletin 92/53**

(84) Etats contractants désignés : **BE CH DE ES FR GB IT LI LU NL SE**

(56) Documents cités :
**DE-A- 3 521 250**
**GB-A- 588 762**
**GB-A- 636 359**
**NL-A- 296 458**
**US-A- 2 630 656**
**US-A- 3 516 938**

(73) Titulaire : **SAINT-GOBAIN VITRAGE INTERNATIONAL**
**18, avenue d'Alsace**
**F-92400 Courbevoie (FR)**

(72) Inventeur : **Berquier, Jean-Marc**
**15, Rue Martissot**
**F-92110 Clichy (FR)**
Inventeur : **Ausserre, Dominique**
**4, Rue du Repos**
**F-72100 Le Mans (FR)**
Inventeur : **Leger, Liliane**
**15 Ter, Rue des Tournelles-Pav. 48**
**F-94240 L'Hay-Les-Roses (FR)**

(74) Mandataire : **Luziau, Nelly et al**
**Saint Gobain Recherche 39, Quai Lucien Lefranc BP 135**
**F-93303 Aubervilliers Cédex (FR)**

**EP 0 352 180 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention est relative à un vitrage antigivre.

Les vitrages que l'on utilise pour des véhicules de transport ou pour le bâtiment ont tendance à se recouvrir de givre lorsque la température est basse.

L'élimination de cette couche de givre est difficile. Par exemple, dans le cas des véhicules routiers, il est nécessaire de faire fonctionner le chauffage dans l'habitacle du véhicule, le chauffage électrique à résistance incorporé dans les vitrages, notamment ceux des lunettes arrières des voitures. Le dégivrage, par ces moyens, est toujours long.

Des traitements du verre à l'aide de composition contenant un organosilane pour en modifier les propriétés de surface ont déjà été proposés par exemple dans les publications GB-A-588 762, GB-A-636 359 et US-A-2 630 656. Ces traitements utilisent des compositions d'organosilane dans un système de solvant polaire. Ils n'abordent pas le problème de l'élimination rapide d'une couche de givre à la surface d'un vitrage.

L'invention a donc pour objet un vitrage muni d'une couche antigivre qui permet une élimination rapide du givre formé.

L'invention a aussi pour objet un procédé de formation d'une telle couche qui adhère bien au support de verre.

Le vitrage selon l'invention comprend une couche antigivre qui est hydrophobe et formée à partir d'une composition d'au moins un organosilane à longue chaîne hydrocarbonée aliphatique saturée ou non, contenant au moins 11 atomes de carbone, dans un système solvant non polaire, comprenant au moins 80 % en volume d'au moins un solvant non polaire hydrocarboné et, en quantité faible, inférieure ou égale à 20 % en volume, un solvant chloré ou un mélange de solvants chlorés.

Le procédé selon l'invention pour déposer une couche antigivre sur un support en verre consiste (1) à nettoyer la surface de verre pour éliminer les contaminants organiques et minéraux, (2) à hydrater ensuite la surface nettoyée, (3) à plonger le support en verre dans la composition d'organosilane décrite précédemment, celle-ci étant maintenue sous atmosphère sèche, à température ambiante, l'immersion ayant lieu en présence d'une agitation obtenue à l'aide d'un générateur d'ultrasons et, (4) à rincer la couche obtenue avec un solvant polaire ou aromatique.

La composition utile pour former la couche antigivre comprend un organosilane qui a une chaîne hydrocarbonée aliphatique contenant au moins 11 atomes de carbone. Les organosilanes utilisés de préférence dans l'invention sont des chlorosilanes, en particulier des trichlorosilanes. Des organosilanes appropriés sont par exemple le 10-undecenyltrichlorosilane, le 13-tetradecenyltrichlorosilane, le 14-pentadecenyltrichlorosilane, le 15-hexadecenyltrichlorosilane, le n-hexadecyltrichlorosilane et le n-octadecyltrichlorosilane. Dans la composition, le composé organosilane est utilisé en concentration de $2.10^{-3}$ à $5.10^{-2}$ M.

Le système solvant non polaire comprend un solvant hydrocarboné usuel tel que les alcanes, comme le n-hexadecane et l'isooctane. Le solvant non polaire est associé à des solvants polaires qui sont alors utilisés en faible quantité, par exemple des solvants chlorés utilisés seuls ou en mélange, comme le dichlorométhane, le trichlorométhane, le trichloroéthane, le trichloroéthylène, le trichlorotrifluoroéthane et le tétrachlorure de carbone. Le système solvant comprend généralement au moins 80 % en volume de solvant non polaire. Les solvants chlorés, lorsqu'ils sont utilisés représentent 20 % ou moins du système solvant. Lorsqu'on utilise, avec le solvant non polaire, un mélange de solvants chlorés, ceux-ci peuvent être en proportion variable. Ainsi, on peut utiliser par exemple un mélange de tétrachlorure de carbone (12 %) et de chloroforme (8 %), de trichlorotrifluoroéthane (10%) et de trichloroéthane (10 %).

Avant d'appliquer la composition d'organosilane sur un support de verre pour obtenir une couche antigivre, on nettoie la surface de verre à enduire pour éliminer tous contaminants organiques et minéraux et la rendre ainsi parfaitement mouillable.

Pour cela, on peut utiliser tout traitement approprié. On peut par exemple, nettoyer la surface de verre avec un solvant ou un mélange de solvants usuels, éventuellement en présence d'ultrasons. On peut aussi traiter la surface par une solution de détergent, comme une solution de "Liquinox" (de Aldrich), de "Deconex 12" (Borer Chemie), puis éventuellement par un solvant polaire comme le chloroforme. On peut aussi nettoyer la surface de verre avec des solvants et/ou des solutions de détergents, puis la traiter par de l'ozone, en l'exposant aux UV sous atmosphère d'oxygène. On peut aussi traiter la surface de verre par tout autre procédé approprié, par exemple y déposer une couche intermédiaire, de manière à améliorer l'adhérence de la couche antigivre.

Avant le couchage de la composition d'organosilane sur la surface de verre nettoyée, on rehydrate cette dernière en la laissant, par exemple, quelques secondes, en atmosphère humide. On place alors le vitrage dans la solution d'organosilane, sous atmosphère sèche, de préférence sous atmosphère d'azote sec, et à température ambiante (16°-24°C). L'immersion est effectuée en présence d'agitation obtenue à l'aide d'un générateur d'ultrasons. La durée du traitement est de l'ordre de quelques minutes, par exemple, de 1 mn à 10 mn. On rince ensuite avec un solvant polaire ou aromatique, tel que le trichloroéthane, le trichlorométhane, le toluène, éventuellement en présence d'ultrasons, pour assurer la stabilité des couches formées.

Le dépôt de la couche antigivre est considéré comme terminé lorsque la surface de verre portant cette couche apparait sèche, très rapidement, à sa sortie de la solution.

Il est important que le dépôt de la couche hydrophobe sur la surface de verre se fasse dans les conditions indiquées. Notamment, la composition comprend l'organosilane dans un système solvant non polaire qui favorise particulièrement le greffage du silane sur la surface de verre.

En outre, le traitement a lieu sous atmosphère sèche, particulièrement sous atmosphère d'azote sec, car les organosilanes sont très sensibles à des traces d'humidité et ont tendance à polymériser en présence d'eau, ce qui conduit à des couches greffées irrégulièrement.

La température est un facteur important. La température ambiante (16-24°C) permet d'augmenter le taux de greffage des silanes (environ 60 % - mesuré par FTIR). Une température plus élevée de l'ordre de 30-40°C est aussi possible, si l'on souhaite obtenir un faible taux de greffage.

On a remarqué que le traitement en présence d'une agitation obtenue à l'aide d'un générateur d'ultrasons permet une meilleure homogénéité de la couche, évitant la formation d'agrégats en surface.

La couche obtenue est une monocouche ordonnée à motifs polysiloxane, dans laquelle les organosilanes ont été greffés régulièrement. On pense que la structure est la suivante :

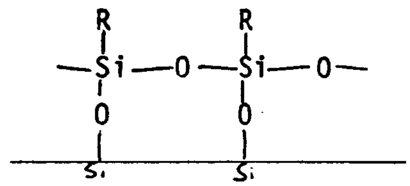

où R est la longue chaîne hydrocarbonée aliphatique.

Les couches obtenues confèrent au support de verre des propriétés antigivre uniforme sur toute la surface.

Pour déterminer le caractère hydrophobe de la couche obtenue, on mesure alors l'angle de contact que fait le bord d'une goutte d'eau avec la couche déposée sur la surface de verre.

On considère que la surface de verre traitée présente un caractère antigivre, lorsque l'angle de contact est supérieur à 80°, et de préférence égal ou supérieur à 100°.

Pour déterminer l'action antigivre de la couche déposée, on place les vitrages enduits en atmosphère humide à -20°C. Les surfaces se couvrent de givre. Pour que les couches présentent un caractère antigivre satisfaisant, il faut qu'avec une simple pression du doigt sur le givre ou un très léger essuyage, en l'absence de tout chauffage, la couche de givre se détache et tombe.

Les exemples suivants, non limitatifs, illustrent l'invention.

EXEMPLE 1

On utilise comme support, une plaque de verre silicosodocalcique obtenue par la technique de fabrication du verre "flotté".

On nettoie la surface de la plaque de verre qui doit être enduite de la couche antigivre. Pour cela, on utilise une solution aqueuse à 1 % de détergent "Liquinox" (Aldrich). On laisse tremper la plaque dans cette solution pendant une heure environ. On rince ensuite la plaque avec de l'eau, puis avec de l'alcool. On sèche avec un courant d'azote. On laisse la plaque ainsi nettoyée à l'air ambiant, à l'abri de la poussière, pendant 30 à 60 secondes. Puis, on trempe la plaque, pendant une minute dans du trichloroéthane en présence d'ultrasons.

On prépare une solution contenant du n-octadecyltrichlorosilane (OTS) en concentration de $4.10^{-3}$ M dans un mélange de solvant non polaire comprenant 80 % en volume de n-hexadécane, 12 % de tétrachlorure de carbone et 8 % de chloroforme.

On introduit la plaque de verre dans cette solution, à température ambiante (22°C), sous atmosphère d'azote sec, l'agitation de la solution étant obtenue à l'aide d'un générateur d'ultrasons. On laisse la plaque dans la solution pendant 4 mn.

On rince la plaque avec du trichloroéthane, en présence d'ultrasons.

L'angle de contact d'une goutte d'eau sur la couche enduite est de 101°.

On place la plaque en atmosphère humide à - 20°C. Les surfaces de la plaque se couvrent de givre.

Il suffit d'essuyer très légèrement les surfaces de la plaque portant le givre pour que la couche de givre se détache et tombe.

EXEMPLE 2

On opère comme à l'exemple 1, mais pour nettoyer la plaque de verre avant le dépôt de la couche antigivre, on utilise un bain de toluène, dont l'agitation est obtenue avec un générateur d'ultrasons. Pour éliminer tout contaminant organique, on soumet ensuite la surface de verre à de l'ozone en l'exposant pendant 30 mn, à la lumière ultraviolette, sous atmosphère d'oxygène.

On laisse la surface ozonée à l'air ambiant pendant quelques secondes, à l'abri de la poussière, puis on y dépose une couche antigivre à partir de la solution silane, comme à l'exemple 1. L'angle de contact d'une goutte sur cette couche est de 110°.

Le test du givrage montre que cette couche a de très bonnes propriétés antigivre, la couche de givre formée à -20°C s'éliminant très facilement par une simple pression du doigt.

EXEMPLE 3

On opère comme à l'exemple 1, mais on utilise, pour former la couche antigivre, une solution contenant 0,2 ml de OTS pour 100 ml d'un système solvant non polaire comprenant 80 % en poids d'isooctane, 10 % de trichlorotrifluoroéthane et 10 % de trichloroéthane et on rince la plaque enduite, pendant 10 mn, en présence d'ultrasons, avec du trichloroéthane.

L'angle de contact d'une goutte d'eau sur cette couche est de 106°.

Une couche de givre formée à - 20°C, comme indiqué précédemment, s'élimine facilement, par simple frottement du doigt sur la couche de givre.

EXEMPLE 4

On opère comme à l'exemple 1, c'est à dire que la couche n'est pas traitée par de l'ozone ; en outre, on se soumet pas la surface deverre à l'air ambiant après son nettoyage, mais au contraire, on met la plaque à l'étuve pendant 1 heure à 120°C. On laisse refroidir en atmosphère sèche.

Après le dépôt de la solution de silane comme à l'exemple 1, l'angle de contact d'une goutte d'eau sur la couche obtenue est de 80°.

Du givre, formé à -20°C, s'élimine difficilement.

Le tableau suivant, récapitulatif des exemples, montre que suivant ces conditions de dépôt de la couche antigivre, la couche obtenue donne des résultats plus ou moins bons.

| Ex. | Nettoyage: Solvant et/ou solution de détergent | Nettoyage: ozone | Air | Angle de contact | Dégivrage |
|---|---|---|---|---|---|
| 1 | oui | non | oui | 101° | Bon |
| 2 | oui | oui | oui | 110° | Bon |
| 3 | oui | non | oui | 106° | Bon |
| 4 | oui | non | non | 80° | Passable |

En particulier, les indications du tableau montrent que les meilleurs résultats sont obtenus en déposant une couche de composition d'organosilane, après le nettoyage poussé du support de verre par traitement par l'ozone et après une réhydratation de la surface ozonée.

**Revendications**

1. Vitrage comprenant une feuille de verre revêtue d'une couche antigivre, hydrophobe, formée à partir d'une composition d'au moins un organosilane à chaîne hydrocarbonée aliphatique, saturée ou non, dans un solvant, caractérisé en ce que la chaîne hydrocarbonée aliphatique contient au moins 11 atomes de carbone et en ce que le solvant est un système de solvant non polaire comprenant au moins 80 % en volume

d'au moins un solvant non polaire hydrocarboné et 20 % ou moins d'au moins un solvant chloré.

2. Vitrage selon la revendication 1, caractérisé en ce que l'organosilane est un chlorosilane.

3. Vitrage selon la revendication 2, caractérisé en ce que l'organosilane est choisi dans le groupe formé par le 10-undécényltrichlorosilane, le 13-tétradécényltrichlorosilane, le 14-pentadécényltrichlorosilane, le 15-hexadécényltrichlorosilane, le n-octadécyltrichlorosilane et le n-hexadécyltrichlorosilane.

4. Vitrage selon une des revendications 1 à 3, caractérisé en ce que le solvant non polaire hydrocarboné est le n-hexadécane ou l'isooctane et les solvants chlorés sont choisis dans le groupe formé par le dichlorométhane, le trichlorométhane, le trichloroéthane, le trichloroéthylène, le trichlorotrifluoroéthane et le tétrachlorure de carbone.

5. Vitrage selon une des revendications 1 à 4, caractérisé en ce que la composition contient $2.10^{-3}$ à $5.10^{-2}$ M d'organosilane dans le système solvant non polaire.

6. Procédé de fabrication d'un vitrage à surface antigivre selon une des revendications 1 à 5, caractérisé en ce qu'il consiste :
   1) à nettoyer la surface du vitrage à enduire pour enlever les contaminants organiques et minéraux,
   2) à hydrater la surface de verre nettoyée,
   3) à plonger le vitrage dans la composition d'organo-silane dans le système solvant non polaire, cette composition étant agitée en utilisant un générateur d'ultrasons, maintenue sous atmosphère sèche et à température ambiante,
   4) et à rincer avec un solvant polaire ou aromatique.

7. Procédé selon la revendication 6, caractérisé en ce qu'on nettoie le vitrage avec un solvant et/ou une solution de détergent, puis avec un solvant en présence d'ultrasons.

8. Procédé selon la revendication 6, caractérisé en ce que l'on nettoie le vitrage avec un solvant et/ou une solution de détergent, puis que l'on traite la surface, par de l'ozone.

9. Procédé selon la revendication 6, caractérisé en ce que, pendant l'immersion du vitrage dans la composition d'organosilane, cette dernière est maintenue sous atmosphère d'azote sec.

## Claims

1. Glazing pane comprising a glass sheet, coated with an anti-frosting, hydrophobic film formed from a composition of at least one saturated or unsaturated, aliphatic, hydrocarbon long-chain organosilane in a solvent, characterized in that the aliphatic hydrocarbon chain contains at least eleven carbon atoms and in that the solvent is a non-polar solvent system comprising at least 80 % by volume of at least one hydrocarbon, non-polar solvent and 20 % or less of at least one chlorinated solvent.

2. Pane according to Claim 1, characterized in that the organosilane is a chlorosilane.

3. Pane according to Claim 2, characterized in that the organosilane is selected from the group formed of 10-undecenyltrichlorosilane, 13-tetradecenyltrichlorosilane, 14-pentadecenyltrichlorosilane, 15-hexadecenyltrichlorosilane, n-octadecyltrichlorosilane and n-hexadecyltrichlorosilane.

4. Pane according to one of Claims 1 to 3, characterized in that the hydrocarbon non-polar solvent is n-hexadecane or isooctane and the chlorinated solvents are chosen from the group formed of dichloromethane, trichloromethane, trichloroethane, trichlorethylene, trichlorotrifluoroethane and carbon tetrachloride.

5. Pane according to one of Claims 1 to 4, characterized in that the composition contains $2 \times 10^{-3}$ to $5 \times 10^{-2}$ M of organosilane in the non-polar solvent system.

6. Process for the production of a pane having an antifrosting surface according to one of Claims 1 to 5, characterized in that it consists:
   1) of cleaning the surface of the pane to be coated for the purpose of removing the organic and mineral contaminants,

2) of hydrating the surface of the cleaned glass,
3) of dipping the pane in the organosilane composition in the non-polar solvent system, this composition being stirred by using an ultrasonic generator, kept below a dry atmosphere and at ambient temperature.
4) and of rinsing with a polar or aromatic solvent.

7. Process according to Claim 6, characterized in that the pane is cleaned with a solvent and/or a detergent solution, then with a solvent in the presence of ultrasonics.

8. Process according to Claim 6, characterized in that the pane is cleaned with a solvent and/or a detergent solution, then the surface is treated with ozone.

9. Process according to Claim 6, characterized in that during the immersion of the pane in the organosilane composition, this composition is maintained under a dry nitrogen atmosphere.

## Patentansprüche

1. Verglasung mit einer Glasscheibe, die mit einer eisabweisenden und hydrophoben Schicht versehen ist, welche ausgehend von einer Zusammensetzung mit wenigstens einem Organosilan mit einer gesättigten oder ungesättigten aliphatischen Kohlenwasserstoffkette in einem Lösungsmittel gebildet ist, **dadurch gekennzeichnet**, daß die aliphatische Kohlenwasserstoffkette wenigstens 11 Kohlenstoffatome aufweist und daß das Lösungsmittel ein nichtpolares Lösungsmittelsystem ist, das wenigstens 80 Volumen-% wenigstens eines nichtpolaren Kohlenwasserstofflösungsmittels und 20 % oder weniger wenigstens eines chlorierten Lösungsmittels umfaßt.

2. Verglasung nach Anspruch 1, **dadurch gekennzeichnet**, daß das Organosilan ein Chlorsilan ist.

3. Verglasung nach Anspruch 2, **dadurch gekennzeichnet**, daß das Organosilan aus der von 10-Undecenyltrichlorsilan, 13-Tetradecenyltrichlorsilan, 14-Pentadecenyltriclorsilan, 15-Hexadecenyltrichlorsilan, n-Octadecyltrichlorsilan und n-Hexadecyltrichlorsilan gebildeten Gruppe ausgewählt ist.

4. Verglasung nach einem der Ansprüche 1 bis 3, **dadurch gekennzeichnet**, daß das nichtpolare Kohlenwasserstofflösungsmittel n-Hexadecan oder Isooctan ist und daß die chlorierten Lösungsmittel aus der von Dichlormethan, Trichlormethan, Trichlorethan, Trichlorethylen, Trichlortrifluorethan und Tetrachlorkohlenstoff gebildeten Gruppe ausgewählt sind.

5. Verglasung nach einem der Ansprüche 1 bis 4, **dadurch gekennzeichnet**, daß die Zusammensetzung 2 x $10^{-3}$ bis 5 x $10^{-2}$ M Organosilan im nichtpolaren Lösungsmittelsystem enthält.

6. Verfahren zur Herstellung einer Verglasung mit eisabweisender Oberfläche nach einem der Ansprüche 1 bis 5, **dadurch gekennzeichnet**, daß es aus
(1) der Reinigung der zu beschichtenden Oberfläche der Verglasung zur Entfernung von organischen und mineralischen Verunreinigungen,
(2) der Hydratisierung der gereinigten Glasoberfläche,
(3) dem Eintauchen der Verglasung in die Organosilanzusammensetzung im nichtpolaren Lösungsmittelsystem, das unter trockener Atmosphäre und bei Raumtemperatur gehalten wird, wobei die Zusammensetzung unter Verwendung eines Ultraschallgenerators agitiert wird,
(4) und dem Spülen mit einem polaren oder aromatischen Lösungsmittel besteht.

7. Verfahren nach Anspruch 6, **dadurch gekennzeichnet**, daß die Reinigung der Verglasung mit einem Lösungsmittel und/oder einer Lösung eines Detergents erfolgt, danach mit einem Lösungsmittel in Gegenwart von Ultraschall.

8. Verfahren nach Anspruch 6, **dadurch gekennzeichnet**, daß die Reinigung der Scheibe mit einem Lösungsmittel und/oder einer Lösung eines Detergents erfolgt und danach durch Behandlung der Oberfläche mit Ozon.

9. Verfahren nach Anspruch 6, **dadurch gekennzeichnet**, daß während des Eintauchens der Verglasung in die Organosilanzusammensetzung letztere unter einer trockenen Stickstoffatmosphäre gehalten wird.